# EUROPÄISCHE PATENTSCHRIFT

(11) **EP 1 049 890 B1**
(45) Veröffentlichungstag und Bekanntmachung des Hinweises auf die Patenterteilung: **09.10.2002**
(21) Anmeldenummer: 99964354.7
(22) Anmeldetag: 22.11.1999
(51) Int. Cl.: F16H 59/02

(54) **SCHLITZABDECKUNG EINER SCHALTVORRICHTUNG**
SLIT COVER OF A SHIFTING DEVICE
OBTURATEUR DE FENTE POUR DISPOSITIF SELECTEUR

(30) Priorität: 23.11.1998 DE 19853932
(43) Veröffentlichungstag der Anmeldung: 08.11.2000
(73) Patentinhaber: ZF Lemförder Metallwaren AG, 49441 Lemförde (DE)
(72) Erfinder: GIEFER, Andreas, D-49448 Lemförde (DE)
(86) Internationale Anmeldenummer: DE9903704
(87) Internationale Veröffentlichungsnummer: WO00031441

(56) Entgegenhaltungen:
- DE-A- 3 633 688
- DE-A- 19 728 548
- DE-C- 4 445 925
- DE-U- 8 634 022
- US-A- 4 566 399

## Beschreibung

Die Erfindung betrifft eine Schlitzabdeckung einer Schaltvorrichtung eines Kraftfahrzeuggetriebes, insbesondere eines Automatikgetriebes, die einen entlang einer in einer Abdeckplatte vorgesehenen Schaltgasse bewegbaren Wählhebel und eine Kinematik zur Übertragung der Wählbewegungen auf das Getriebe aufweist, wobei die Schlitzabdeckung mit einer einzigen beweglichen Jalousie, welche mindestens eine Bewegungsgasse, wie eine Schaltgasse oder eine Wählgasse, abdeckt und mit einer Führung für die Jalousie versehen ist, welche mindestens eine Öffnung für den Durchtritt des Wählhebels aufweist und ein endloses Band ist, das eine geschlossene Schleife bildet.

Eine ähnliche Schlitzabdeckung ist bereits aus DE 44 45 925 C1, das als nächstliegender Stand der Technik angesehen wird, bekannt. Diese Schrift offenbart eine Schlitzabdeckung einer Schaltvorrichtung für ein Automatikgetriebe eines Kraftfahrzeuges mit einem Wählhebel, wobei die bewegliche Jalousie, welche die Schaltgasse abdeckt, von seitlich angeordneten Führungsschienen (U-Profilen) geführt wird, und wobei die Jalousie über eine Öffnung verfügt, durch welche der Wählhebel hindurchtritt. Die Jalousie selbst ist quer zu ihrer Bewegungsrichtung steif und in Bewegungsrichtung leicht biegbar ausgeführt.

Bei dieser Ausführung besteht das Problem, daß die Jalousie bei Bewegungen in der Führung oder auch bei Vibrationen unerwünschte Klapper- oder Knirschgeräusche verursacht. Weiterhin ist die Führung der Jalousie, bezüglich ihrer Haltbarkeit und Funktionssicherheit, problematisch, da die Enden der Jalousie frei sind und es dadurch leicht zu Brüchen oder sonstigen Beschädigungen der Jalousie kommt.

Aus der DE 197 28 548 A1 ist eine Schlitzabdeckung einer Schaltvorrichtung eines Kraftfahrzeuggetriebes bekannt, die einen entlang einer in einer Abdeckplatte vorgesehenen Schaltgasse bewegbaren Wählhebel aufweist, wobei die Schlitzabdeckung mit einer beweglichen Jalousie, welche mindestens eine Bewegungsgasse, wie eine Schaltgasse oder einer Wählgasse, abdeckt und mit einer Führung für die Jalousie versehen ist, welche mindestens eine Öffnung für den Durchtritt des Wählhebels aufweist und ein endloses Band ist, das eine geschlossene Schleife bildet.

Aus der DE-U-86 34 022 ist eine Abdeckung für eine Schaltvorrichtung bekannt, wobei eine eine Öffnung für den Schalthebel aufweisende erste Abdeckbahn in einer ersten Bewegungsrichtung des Schalthebels verschiebbar angeordnet ist und wobei eine zweite, die erste Abdeckbahn mitnehmende Abdeckbahn in einer zweiten Führung in einer zweiten Bewegungsrichtung des Schalthebels verschiebbar angeordnet ist.

Es ist Aufgabe der Erfindung eine Schlitzabdeckung einer Schaltvorrichtung eines Kraftfahrzeuggetriebes zu finden, welche für zusätzliche seitliche Bewegbarkeit des Wählhebels geeignet ist, geräuscharm beweglich ist und eine sichere Führung der Jalousie gewährleistet.

Die Aufgabe der Erfindung wird durch die Merkmale des Anspruches 1 gelöst. Bevorzugte Weiterbildungen sind in den Unteransprüchen beschrieben.

Es wird vorgeschlagen, die eingangs genannte Schlitzabdeckung einer Schaltvorrichtung eines Kraftfahrzeuggetriebes, insbesondere eines Automatikgetriebes, die einen entlang einer in einer Abdeckplatte vorgesehenen Schaltgasse bewegbaren Wählhebel und eine Kinematik zur Übertragung der Wählbewegungen auf das Getriebe aufweist, wobei die Schlitzabdeckung mit einer einzigen beweglichen Jalousie, welche mindestens eine Bewegungsgasse, wie eine Schaltgasse oder eine Wählgasse, abdeckt und mit einer Führung für die Jalousie versehen ist, welche mindestens eine Öffnung für den Durchtritt des Wählhebels aufweist dahingehend weiterzuentwickeln, daß die Jalousie ein endloses Band ist, das eine geschlossene Schleife bildet, und einschließlich ihrer Führung gegenüber der Abdeckplatte senkrecht zur Bewegungsrichtung der Jalousie verschiebbar ausgeführt ist.

Durch diese Ausführungsform der Jalousie - als endloses Band - wird die Führung der Jalousie verbessert, da bei einer Bewegung des Wählhebels nach vorne oder hinten auf die Jalousie nicht mehr nur einseitige Kräfte wirken, sondern gleichzeitig sowohl Zugals auch Druckkräfte. Weiterhin wird es durch diese Ausführungsform möglich, die Jalousie besonders geschmeidig zu gestalten, da durch die Kraftumleitung die Führung der Jalousie wesentlich verbessert ist, und eine Eigensteifigkeit der Jalousie - wie im Stand der Technik - nicht mehr notwendig ist. Da weiche Materialien nicht zum Klappern neigen, ist die erfindungsgemäße Jalousie auch geräuscharm.

Gemäß einer besonderen Ausführungsform der Schlitzabdeckung ist vorgesehen, daß die Führung der Jalousie mindestens ein Umlenkelement aufweist, wobei ein Umlenkelement wahlweise aus einer oder mehreren Umlenkrollen bestehen kann, die sich um eine Umlenkachse drehen. Außerdem kann das mindestens eine Umlenkelement auch über gekrümmte Gleitflächen für die Jalousie verfügen, um welche die Umlenkung stattfindet.

In einer bevorzugten Ausführungsform der Schlitzabdeckung sind eine Vielzahl von Umlenkelementen, vorzugsweise vier Umlenkachsen, für die Führung der Jalousie vorgesehen. Besonders vorteilhaft ist es, wenn mindestens zwei Umlenkachsen innerhalb der von der Jalousie gebildeten Schleife angeordnet sind, wobei es zusätzlich vorteilhaft ist, daß mindestens eine Umlenkachse, vorzugsweise zwei Umlenkachsen, sich außerhalb der Jalousieschleife befindet/befinden. Durch die Anordnung von zwei Umlenkachsen innerhalb der Jalousieschleife kann die Jalousie in der entsprechenden Weise gestreckt werden, während das mindestens eine Umlenkelement, das sich außerhalb der Jalousieschleife befindet, für eine entsprechende Spannung der Jalousie sorgen kann.

Eine Umlenkachse kann einerseits aus einer einzelnen, querverlaufenden Umlenkrolle oder auch aus zwei seitlich angeordneten, kurzen Umlenkrollen bestehen, die ihrerseits koaxial verlaufen können.

Eine weitere, vorteilhafte Ausführung der Schlitzabdeckung besteht darin, daß mindestens eines der Umlenkelemente elastisch gelagert ist. Durch diese elastische Lagerung besteht die Möglichkeit der Jalousieschleife eine Eigenspannung mitzugeben, die eine besonders problemlose und sichere Führung der Jalousie ermöglicht.

Andererseits besteht auch die Möglichkeit, die Jalousie selbst, zumindestens über einen Teil ihrer Schleife, elastisch auszubilden, so daß die bevorzugte Spannung die auf der Jalousie lasten soll durch die Elastizität der Jalousie selbst bewirkt wird. Hierbei muß allerdings nicht unbedingt die gesamte Jalousie elastisch ausgebildet sein, sondern es reicht aus, wenn ein Teil der Schleife elastisch ist. Vorzugsweise können dies schmale Bänder der Jalousie sein.

Vorteilhaft kann es hierbei auch sein, wenn die Jalousie mehrteilig ausgeführt wird. So besteht zum Beispiel die Möglichkeit, daß der eigentliche abdeckende Teil der Jalousie lamellenartig ausgeführt wird, während die Verbindungsteile zwischen dem lamellenartig ausgebildeten Teil der Jalousie über zumindestens ein elastisches Element, zum Beispiel eine Feder oder ein elastisches Band verfügen.

Eine weitere, vorteilhafte Ausführungsform sieht vor, daß zur Führung der Jalousie, vorzugsweise seitlich angeordnete Gleitschienen vorgesehen sind, in die die Jalousie seitlich eingreift. Durch diese Ausführungsform wird eine besonders sichere Führung gewährleistet.

Weitere vorteilhafte Ausgestaltungsformen der Jalousie sehen vor, daß diese beispielsweise als Gummi- oder Kunststoffband, als Drahtschlaufe oder aus anderen Materialien bestehend, ausgestaltet wird, wobei ferner die Möglichkeit besteht, die Jalousie - zumindest teilweise - als eine Aneinanderreihung von querliegenden Lamellen auszuführen.

Gemäß einer Ausgestaltung der erfindungsgemäßen Schlitzabdeckung kann vorgesehen werden, daß diese komplett oberhalb der eigentlichen Schaltvorrichtung geführt wird. Hierdurch ist es notwendig, in der Jalousie zwei Öffnungen vorzusehen, wobei eine der Öffnungen den Wählhebel relativ paßgenau umschließt, während die andere Öffnung einen ausreichenden Spielraum aufweist, so daß Bewegungen des Wählhebels, die auf der unteren Seite der Jalousie jeweils zu einer entgegengesetzten Bewegung der Jalousieschleife führen, ermöglicht werden.

Darüber hinaus kann in eine erfindungsgemäße Schlitzabdeckung in einfacher Weise zusätzlich eine Erfassung der Schaltstellung des Wählhebels integriert werden. So können beispielsweise an den Umlenkelementen Signalgeber angebracht sein, deren Signale von beabstandeten Signalaufnehmern erfaßt werden. Das ähnlich einer Drehzahlmessung funktionierende Prinzip ist beispielsweise mittels Hall-Sensoren und Permanentmagneten realisierbar, wobei jeder Schaltstellung ein Meßwertpaar zugeordnet ist.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus den Unteransprüchen und der nachfolgenden Beschreibung eines bevorzugten Ausführungsbeispieles unter Bezugnahme auf die Zeichnungen.

Die Figuren zeigen im einzelnen:
- Figur 1:: Schlitzabdeckung mit vier Umlenkachsen in Ansicht von unten;
- Figur 2:: Schlitzabdeckung in Seitenansicht;
- Figur 3:: Schlitzabdeckung in schräger 3D-Sicht von unten;
- Figur 4:: Schlitzabdeckung mit Abdeckplatte im Längsschnitt;
- Figur 5:: Schlitzabdeckung mit Abdeckplatte in Frontansicht;
- Figur 6:: Schlitzabdeckung einschließlich seitlichem Versatz;
- Figur 7:: Schlitzabdeckung mit Abdeckplatte und seitlicher Versatzmöglichkeit.

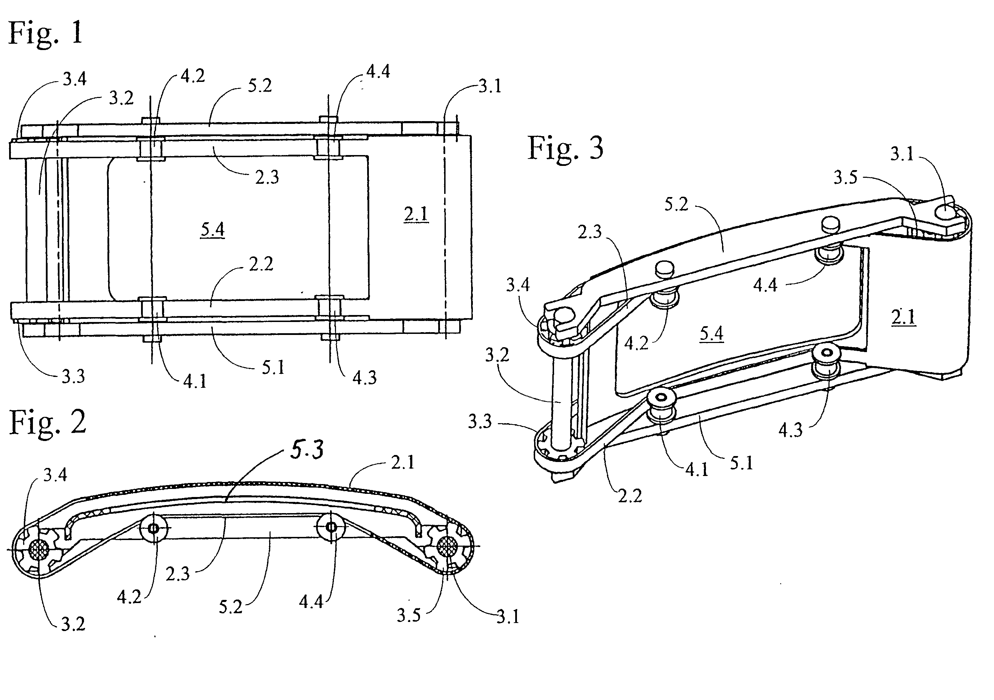

Die Figuren 1, 2 und 3 zeigen unterschiedliche Ansichten der erfindungsgemäßen Schlitzabdeckung.

Die Figur 1 zeigt die Schlitzabdeckung in einer Unteransicht. Die Schlitzabdeckung besteht aus einer Tragkonstruktion 5, welche aus einer, in der Mitte angeordneten Zentralplatte 5.3 und zwei seitlich dazu angeordneten Trägern 5.1 und 5.2 besteht. In der Zentralplatte 5.3 ist eine großzügige Öffnung 5.4 vorgesehen. An den äußeren Enden der Tragkonstruktion 5 sind zwei Umlenkelemente angeordnet, die durch zwei breite Umlenkrollen 3.1 und 3.2 gebildet werden, auf deren Enden jeweils zwei Zahnräder 3.3 und 3.4, beziehungsweise 3.5 und 3.6 angeordnet sind. Die breiten Umlenkrollen 3.1 und 3.2 sind jeweils an den Enden der seitlichen Träger 5.1 und 5.2 drehbar gelagert. Weiterhin befinden sich im Zentralbereich der Träger 5.1 und 5.2 vier schmale

Umlenkrollen 4.1 bis 4.4, die miteinander ein Rechteck mit zwei Umlenkachsen bilden. Auch die schmalen Umlenkrollen 4.1 bis 4.4 sind drehbar in den seitlichen Trägern 5.1 und 5.2 gelagert. Um die Umlenkrollen herum wird die Jalousie 2 geführt, die ein endloses Band bildet, wobei ein Teil dieses endlosen Bandes aus einem breiten Band 2.1 und der andere Teil aus zwei schmalen Bändern 2.2 beziehungsweise 2.3 besteht, die mit ihren Enden jeweils in die Enden des breiten Bandes übergehen. Im Bereich des breiten Bandes 2.1 ist eine Öffnung für den Wählhebel vorgesehen, und die beiden schmalen Bänder 2.2 und 2.3 bilden selbst eine Öffnung durch die ein Wählhebel geführt werden kann.

Die Führung des Bandes ist in der Figur 2, die eine Seitenansicht der Schlitzabdeckung darstellt, besonders gut zu erkennen. Sie erfolgt derart, daß die Jalousie 2 endseitig die beiden breiten Umlenkrollen 3.1 und 3.2 umschließt und über die, auf den breiten Umlenkrollen angebrachten, Zahnräder 3.3 bis 3.6 abrollt. Außerhalb des Umfanges der Schleife sind die schmalen Umlenkrollen 4.1 bis 4.4 angeordnet, wobei sich die kleinen Umlenkrollen 4.1 bis 4.4 in die Schleife der Jalousie 2 hineindrücken und somit für eine entsprechende Spannung der Jalousie sorgen. Die Umlenkrollen 4.1 bis 4.4 verfügen an ihren Rändern jeweils über Wulste, die ein Ausbrechen der schmalen Bänder 2.2 und 2.3 verhindern. Die Aufteilung der Jalousie 2 ist im Bereich des breiten Bandes 2.1 und im Bereich der schmalen Bänder 2.2 und 2.3 derart gestaltet, daß bei einer Bewegung des Wählhebels die schmalen Umlenkrollen 4.1 bis 4.4 jeweils nur mit den schmalen Bändern 2.2 und 2.3 in Berührung kommen.

Eine zusätzliche Führung der Jalousie 2 wird durch die seitlichen Träger 5.1 und 5.2 erreicht, welche auf ihrer Oberseite gekrümmt ausgeführt sind und eine Kurvatur bilden, über die die Jalousie 2 gleiten kann. Zusätzlich ist noch ein Teil der Zentralplatte 5.3 an die Kurvatur der seitlichen Träger 5.1 und 5.2 angeglichen, so daß auch noch eine Verbesserung der Jalousie-Führung erreicht wird.

In der Figur 3 ist eine schräge 3D-Ansicht der erfindungsgemäßen Schlitzabdeckung von unten gezeigt, die die Führung der Jalousie und die Funktion der einzelnen Umlenkrollen nochmals verdeutlicht.

In diesem bevorzugten Beispiel ist die Jalousie herstellungstechnisch sehr einfach realisiert worden, denn es besteht durch die gesamte Ausführung der Schlitzabdeckung die Möglichkeit, ein sehr dünnes und flexibles endloses Gummiband zu verwenden, bei dem ein Teil des Gummibandes auf der Innenseite ausgeschnitten wird, so daß lediglich die beiden schmalen Seitenbänder 2.2 und 2.3 stehen bleiben. Zusätzlich kann das endlose Gummiband aus einem langen Schlauch herausgeschnitten werden.

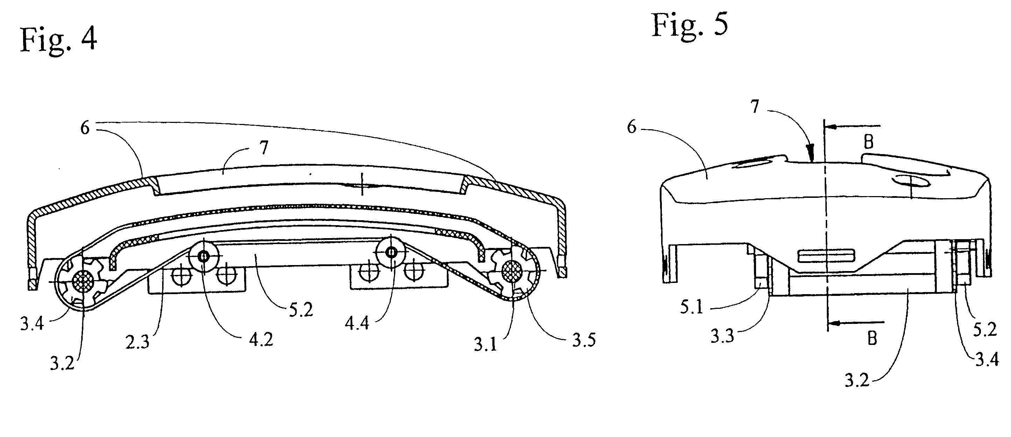

Die Figuren 4 und 5 zeigen zusätzlich in einem Längsschnitt und in einer Frontalansicht die erfindungsgemäße Schlitzabdeckung mit einer Abdeckplatte 6, in welcher sich die Schalt- und Wählgassen 7 für den Wählhebel befinden.

Die seitliche Bewegbarkeit des Wählhebels, wobei lediglich ein passendes Loch für den Wählhebel im breiten Band vorgesehen ist, wird dadurch realisiert, daß die gesamte Schlitzabdeckung 1 gegenüber der Abdeckplatte 6 seitlich verschiebbar angeordnet ist, so daß sich bei einer Seitwärtsbewegung des Wählhebels die gesamte Schlitzabdeckung 1 ebenfalls zur Seite bewegt.

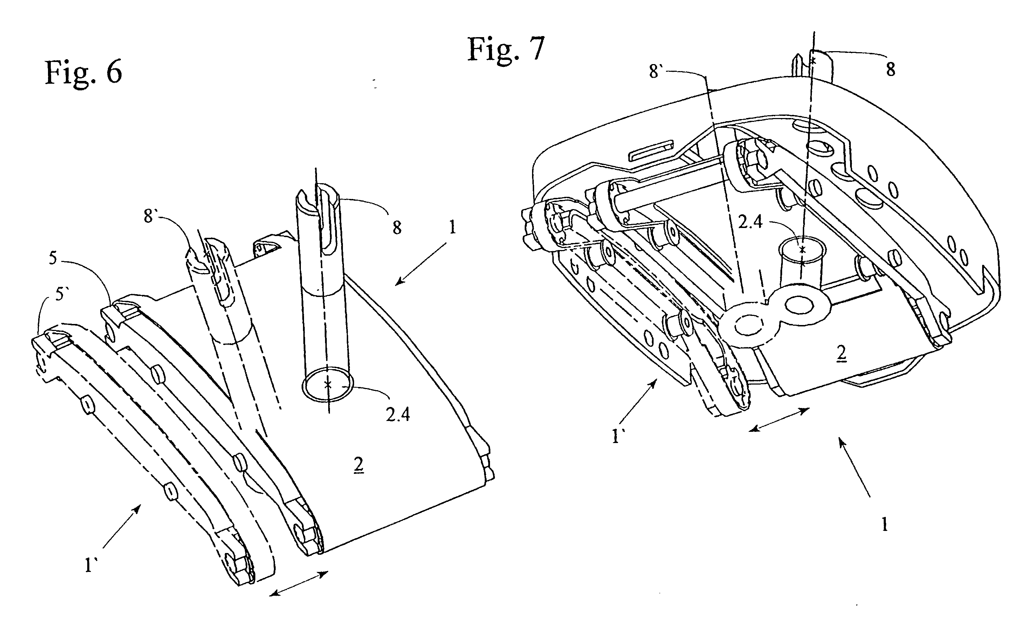

Die Figuren 6 und 7 zeigen eine derartige Schlitzabdeckung 1, die insgesamt durch eine Seitwärtsbewegung des Wählhebels relativ zur Abdeckplatte 6 verschoben werden kann.

Die Figur 6 zeigt die Schlitzabdeckung 1 mit einem Wählhebel 8, der durch eine Öffnung 2.4 durch die Jalousie 2 hindurchgeführt wird. Gestrichelt dargestellt ist eine seitliche Position des Wählhebels 8, durch den auch die gesamte Schlitzabdeckung 1 einschließlich der Tragkonstruktion 5 zur Seite verschoben wird.

In der Figur 7 ist in einer Ansicht von unten eine Abdeckplatte 6 dargestellt, unter der die erfindungsgemäße Schlitzabdeckung 1 angeordnet ist. Auch hier ist der Wählhebel 8 - in einer Seitwärtsschwenkbewegung festgehalten - gestrichelt dargestellt, wobei sich ebenfalls die Schlitzabdeckung 1 in Relation zur Abdeckplatte 6 verschoben hat. Die Verschieblichkeit der Schlitzabdeckung 1 in Relation zur Abdeckplatte 6 kann beispielsweise dadurch erreicht werden, daß die Tragkonstruktion selbst auf der Schaltvorrichtung oder an der Schlitzabdeckung mit einer Halterung befestigt wird, die eine seitliche Bewegung der Schlitzabdeckung zuläßt. Beispielsweise könnten an den schmalen Seiten die Schlitzabdeckung mit den Achsen der breiten Umlenkrollen 3.1 und 3.2 in eine Klammer eingeklipst werden, die in ihrer breiten Ausdehnung wesentlich schmaler ist, als die Länge der breiten Umlenkrollen, so daß hieran die gesamte Schlitzabdeckung 1 von rechts nach links bewegt werden kann.

Insgesamt wird also durch die erfindungsgemäße Schlitzabdeckung einer Schaltvorrichtung eines Kraftfahrzeuggetriebes erreicht, daß eine sichere Führung der Jalousie bewirkt wird und die Jalousie an sich geräuscharm in der Führung beweglich ist.

Gemäß der Erfindung besteht nun die Möglichkeit, mit einer sehr einfachen Ausführung der Schlitzabdeckung bei Schaltungen, die mit seitlich beweglichen Wählhebeln ausgestattet sind, auf eine zweite Jalousie zur Abdeckung der seitlichen Beweglichkeit zu verzichten, da nun die gesamte Abdeckung in sich seitlich bewegt werden kann.

### Bezugszeichenliste:

- 1: Schlitzabdeckung
- 2: Jalousie
- 2.1: breites Band
- 2.2, 2.3: schmales Band
- 2.4: Öffnung
- 3.1, 3.2: breite Umlenkrollen
- 3.3-3.6: Zahnrad
- 4.1 - 4.4: schmale Umlenkrollen
- 5: Tragkonstruktion
- 5.1, 5.2: seitlicher Träger
- 5.3: Zentralplatte
- 5.4: Öffnung in Zentralplatte
- 6: Abdeckplatte
- 7: Schaltgasse
- 8: Wählhebel

## Patentansprüche

1. Schlitzabdeckung (1) für eine Schaltvorrichtung eines Kraftfahrzeuggetriebes, insbesondere eines Automatikgetriebes, die einen entlang einer in einer Abdeckplatte (6) vorgesehenen Schaltgasse (7) bewegbaren Wählhebel (8) und eine Kinematik zur Übertragung der Wählbewegungen auf das Getriebe aufweist, wobei die Schlitzabdeckung (1) mit einer einzigen beweglichen Jalousie (2), zur Abdeckung mindestens einer Bewegungsgasse, wie eine Schaltgasse (7) oder eine Wählgasse, und mit einer Führung (3.1-5) für die Jalousie (2), welche mindestens eine Öffnung für den Durchtritt des Wählhebels (8) aufweist, **dadurch gekennzeichnet, daß** die Jalousie (2) ein endloses Band ist, das eine geschlossene Schleife bildet, und einschließlich ihrer Führung (3.1-5) gegenüber der Abdeckplatte (6) senkrecht zur Bewegungsrichtung der Jalousie (2) verschiebbar ausgeführt ist.

2. Schlitzabdeckung nach Anspruch 1, **dadurch gekennzeichnet, daß** die Führung der Jalousie mindestens ein Umlenkelement (3.1, 3.2, 4.1-4.4, 5.1, 5.2, 5.3) aufweist.

3. Schlitzabdeckung nach einem der vorstehenden Ansprüche, **dadurch gekennzeichnet, daß** mindestens ein Umlenkelement (5.1, 5.2, 5.3) eine gekrümmte Umlenkfläche aufweist.

4. Schlitzabdeckung nach einem der vorstehenden Ansprüche, **dadurch gekennzeichnet, daß** mindestens ein Umlenkelement (3.1, 3.2, 4.1-4.4) eine Umlenkachse oder Umlenkwelle ist.

5. Schlitzabdeckung nach Anspruch 4, **dadurch gekennzeichnet, daß** die mindestens eine Umlenkachse oder Umlenkwelle als durchgehende rotierende Umlenkrolle (3.1, 3.2) ausgerührt ist, die über randständige Zahnräder (3.3-3.6) verfügt.

6. Schlitzabdeckung nach einem der vorstehenden Ansprüche 4 oder 5, **dadurch gekennzeichnet, daß** mindestens eine Umlenkachse oder Umlenkwelle aus zwei voneinander getrennten und koaxial gelagerten Umlenkrollen (4.1, 4.2 und 4.3, 4.4) besteht, die über erhöhte Randwulste verfügen.

7. Schlitzabdeckung nach einem der vorstehenden Ansprüche 2-6, **dadurch gekennzeichnet, daß** mindestens eines der Umlenkelemente (3.1, 3.2), vorzugsweise zwei Umlenkelemente, innerhalb der Jalousieschleife (2) angeordnet ist / sind.

8. Schlitzabdeckung nach einem der vorstehenden Ansprüche 2-7, **dadurch gekennzeichnet, daß** mindestens eines der Umlenkelemente (4.1-4.4), vorzugsweise zwei Umlenkelemente, außerhalb der Jalousieschleife angeordnet ist / sind.

9. Schlitzabdeckung nach einem der vorstehenden Ansprüche 2-7, **dadurch gekennzeichnet, daß** mindestens ein Umlenkelement (3.1, 3.2, 4.1-4.4, 5.1, 5.2, 5.3) elastisch gelagert ist.

10. Schlitzabdeckung nach einem der vorstehenden Ansprüche, **dadurch gekennzeichnet, daß** die Jalousie (2) zumindest über einen Teil ihrer Länge zumindest in Umfangsrichtung elastisch ausgeführt ist.

11. Schlitzabdeckung nach einem der vorstehenden Ansprüche, **dadurch gekennzeichnet, daß** die Jalousie mehrteilig ausgeführt ist.

12. Schlitzabdeckung nach einem der vorstehenden Ansprüche, **dadurch gekennzeichnet, daß** zur Führung der Jalousie (2) - vorzugsweise seitlich angeordnete - Gleitschienen vorgesehen sind, in die die Jalousie eingreift.

13. Schlitzabdeckung nach einem der vorstehenden Ansprüche, **dadurch gekennzeichnet, daß** die Jalousie zwei Öffnungen aufweist, die von dem Wählhebel durchdrungen werden.

14. Schlitzabdeckung nach einem der vorstehenden Ansprüche, **dadurch gekennzeichnet, daß** zur Erfassung der Schaltstellungen des Wählhebels an den Umlenkelementen Signalgeber angebracht sind, deren Signale von ihnen beabstandeten Signalaufnehmern erfaßt werden

15. Schlitzabdeckung nach Anspruch 14, **dadurch gekennzeichnet, daß** die Erfassung der Schaltstellungen mittels Hall-Sensoren und diesen zugeordneten Permanentmagneten erfolgt, wobei jeder Schaltstellung entsprechend, ein Meßwertpaar zugeordnet ist.

## Claims

1. Slit cover (1) for a shifting device of a motor vehicle transmission, in particular of an automatic transmission, which comprises a selector lever (8) which can move along a shift path (7) provided in a cover plate (6), and a kinematic system for transmitting the selection movements to the transmission, wherein the slit cover (1) is with a single mobile shutter (2) for covering at least one path of movement, such as a shift path (7) or a selection path, and with a guide (3.1-5) for the shutter (2), which comprises at least one opening for the passage of the selector lever (8) and is a continuous band which forms a closed loop, **characterised in that** the shutter (2), including its guide (3.1-5), is constructed so as to be displaceable with respect to the cover plate (6) perpendicularly to the direction of movement of the shutter (2).

2. Slit cover according to Claim 1, **characterised in that** the guide of the shutter comprises at least one deflector element (3.1, 3.2, 4.1-4.4, 5.1, 5.2, 5.3).

3. Slit cover according to any one of the preceding Claims, **characterised in that** at least one deflector element (5.1, 5.2, 5.3) has a curved deflector surface.

4. Slit cover according to any one of the preceding Claims, **characterised in that** at least one deflector element (3.1, 3.2, 4.1-4.4) is a deflector pin or deflector shaft.

5. Slit cover according to Claim 4, **characterised in that** the at least one deflector pin or deflector shaft is constructed as a continuous rotating deflector pulley (3.1, 3.2) which has toothed wheels (3.3-3.6) at the edges.

6. Slit cover according to either of the preceding Claims 4 and 5, **characterised in that** at least one deflector pin or deflector shaft consists of two deflector pulleys (4.1, 4.2 and 4.3, 4.4) which are separate from one another, mounted coaxially and have raised edge beads.

7. Slit cover according to any one of the preceding Claims 2-6, **characterised in that** at least one of the deflector elements (3.1, 3.2), preferably two deflector elements, is/are disposed inside the shutter loop (2).

8. Slit cover according to any one of the preceding Claims 2-7, **characterised in that** at least one of the deflector elements (4.1-4.4), preferably two deflector elements, is/are disposed outside of the shutter loop.

9. Slit cover according to any one of the preceding Claims 2-7, **characterised in that** at least one deflector element (3.1, 3.2, 4.1-4.4, 5.1, 5-2, 5.3) is mounted elastically.

10. Slit cover according to any one of the preceding Claims, **characterised in that** the shutter (2) is constructed so as to be elastic at least over a part of its length, at least in the circumferential direction.

11. Slit cover according to any one of the preceding Claims, **characterised in that** the shutter is of multipart construction.

12. Slit cover according to any one of the preceding Claims, **characterised in that** slide rails - preferably disposed laterally - in which the shutter engages are provided to guide the shutter (2).

13. Slit cover according to any one of the preceding Claims, **characterised in that** the shutter comprises two openings through which the selector lever passes.

14. Slit cover according to any one of the preceding Claims, **characterised in that** signal generators are attached to the deflector elements to detect the shift positions of the selector lever, the signals of which generators are picked up by signal receivers disposed at a distance from the generators.

15. Slit cover according to Claim 14, **characterised in that** the shift positions are detected by means of Hall sensors and permanent magnets associated with the latter, wherein a pair of measured values is associated with each shift position.

## Revendications

1. Couvre-fente (1) pour un dispositif de sélection d'une boîte de vitesses de véhicule automobile, notamment d'une boîte de vitesses automatique, qui comprend un levier de sélection (8), déplaçable le long d'une voie de sélection (7) prévue dans une plaque de recouvrement (6), et des moyens cinématiques pour transmettre les mouvements de sélection à la boîte de vitesses, le couvre-fente (1) comportant un obturateur mobile (2) unique, servant à recouvrir au moins une voie de déplacement, telle qu'une voie de sélection (7) ou une voie de changement de vitesse, et un guidage (3.1-5) pour l'obturateur (2), lequel présente au moins une ouverture pour le passage du levier de sélection (), **caractérisé en ce que** l'obturateur (2) est une bande sans fin, qui forme une boucle fermée, et est réalisé de façon à pouvoir être déplacé, y compris son guidage (3.1-5), perpendiculairement, vis-à-vis de la plaque de recouvrement (6), à la direction de déplacement de l'obturateur (2).

2. Couvre-fente suivant la revendication 1, **caractérisé en ce que** le guidage de l'obturateur comprend au mois un élément de changement de direction (3.1, 3.2, 4.1-4.4, 5.1, 5.2, 5.3).

3. Couvre-fente suivant l'une des revendications précédentes, **caractérisé en ce qu'**au moins un élément de changement de direction (5.1, 5.2, 5.3) comporte une surface de changement de direction incurvée.

4. Couvre-fente suivant l'une des revendications précédentes, **caractérisé en ce qu'**au moins un élément de changement de direction (3.1, 3.2, 4.1-4.4) est un axe de changement de direction ou arbre de changement de direction.

5. Couvre-fente suivant la revendication 4, **caractérisé en ce que** le au moins un axe de changement de direction ou arbre de changement de direction est réalisé sous forme d'un rouleau de changement de direction (3.1, 3.2) rotatif continu qui est pourvu de roues dentées (3.3-3.6) disposées au bord.

6. Couvre-fente suivant l'une des revendications 4 ou 5 précédentes, **caractérisé en ce qu'**au moins un axe de changement de direction ou arbre de changement de direction est constitué de deux rouleaux de changement de direction (4.1, 4.2 et 4.3, 4.4), séparés l'un de l'autre et montés d'une manière coaxiale, qui sont pourvus de bourrelets de bord en surépaisseur.

7. Couvre-fente suivant l'une des revendications 2 à 6 précédentes, **caractérisé en ce qu'**au moins l'un des éléments de changement de direction (3.1, 3.2), de préférence deux éléments de changement de direction, est/sont disposés à l'intérieur de la boucle d'obturateur (2).

8. Couvre-fente suivant l'une des revendications 2 à 7 précédentes, **caractérisé en ce qu'**au moins l'un des éléments de changement de direction (4.1 - 4.4), de préférence deux éléments de changement de direction, est/sont disposés à l'extérieur de la boucle d'obturateur.

9. Couvre-fente suivant l'une des revendications 2 à 7 précédentes, **caractérisé en ce qu'**au moins un élément de changement de direction (3.1, 3.2, 4.1-4.4, 5.1, 5.2, 5.3) est monté d'une manière élastique.

10. Couvre-fente suivant l'une des revendications précédentes, **caractérisé en ce qu'**au moins sur une partie de sa longueur, l'obturateur (2) est réalisé d'une manière élastique au moins suivant la direction périphérique.

11. Couvre-fente suivant l'une des revendications précédentes, **caractérisé en ce que** l'obturateur est réalisé en plusieurs parties.

12. Couvre-fente suivant l'une des revendications précédentes, **caractérisé en ce que**, pour le guidage de l'obturateur (2), il est prévu des rails de glissement - disposés de préférence latéralement - dans lesquels l'obturateur est engagé.

13. Couvre-fente suivant l'une des revendications précédentes, **caractérisé en ce que** l'obturateur présente deux ouvertures qui sont traversées par le levier de sélection.

14. Couvre-fente suivant l'une des revendications précédentes, **caractérisé en ce que**, pour détecter les positions de sélection du levier de sélection, des générateurs de signaux, dont les signaux sont détectés par des récepteurs de signaux qui en sont espacés, sont montés sur les éléments de changement de direction.

15. Couvre-fente suivant la revendication 14, **caractérisé en ce que** la détection des positions de sélection a lieu au moyen de capteurs Hall et d'aimants permanents associés à ceux-ci, une paire de valeurs de mesure étant associée d'une manière correspondant à chaque position de sélection.
